# EUROPÄISCHE PATENTSCHRIFT

(11) **EP 1 072 047 B1**
(45) Veröffentlichungstag und Bekanntmachung des Hinweises auf die Patenterteilung: **21.05.2003**
(21) Anmeldenummer: 99924691.1
(22) Anmeldetag: 19.03.1999
(51) Int. Cl.: H01H 33/00

(54) **ANTRIEBSEINRICHTUNG ZUM EIN- UND AUSSCHALTEN VON LEISTUNGSSCHALTERN**
DRIVE UNIT FOR SWITCHING CIRCUIT BREAKERS ON AND OFF
DISPOSITIF D'ACTIONNEMENT POUR LA CONNEXION ET LA DECONNEXION DE SECTIONNEURS DE PUISSANCE

(30) Priorität: 23.03.1998 DE 19813810
(43) Veröffentlichungstag der Anmeldung: 31.01.2001
(73) Patentinhaber: SIEMENS AKTIENGESELLSCHAFT, 80333 München (DE)
(72) Erfinder: VOLKMAR, Ralf, Reiner, D-23758 Oldenburg (DE); DOBRAWA, Andreas, D-12169 Berlin (DE)
(86) Internationale Anmeldenummer: DE9900916
(87) Internationale Veröffentlichungsnummer: WO99049487

(56) Entgegenhaltungen:
- DE-C- 3 823 574
- US-A- 5 296 786

## Beschreibung

Die Erfindung betrifft eine Antriebseinrichtung zum Ein- und Ausschalten von Leistungsschaltern, insbesondere von Trenn- und/oder Erdungsschaltern von Mittelspannungs-Schaltanlagen, mit einem drehrichtungsumschaltbaren Gleichstrommotor und einer Schalteinrichtung, die jeweils zwei separat ansteuerbare, gegenseitig verriegelte, je einer Drehrichtung des Gleichstrommotors zugeordnete Umsteuerschalter enthält, deren Kontakte die zur Drehrichtungsumschaltung notwendige Sromrichtungsumpolung an den Wicklungen der Gleichstrommotore vornehmen, und Leistungsschütze mit den die erforderlichen Schaltvermögen enthaltenden Leistungsschützkontakten zur Lastschaltung aufweisen.

Antriebe der eingangs definierten Art sind durch die DE 38 23 574 C1 bekannt. Innerhalb dieser Antriebseinrichtung sind zwei stromlos schaltenden Umsteuerschaltern jeweils ein Leistungsschütz vorgeschaltet, das mit seinen Leistungsschützkontakten die laststrombehafteten Schaltvorgänge steuert. Die nicht-strombelasteten Umsteuerschalter sind hier als sogenannte Leiterplatten-Bauteile vorgesehen, während die Leistungsschütze mit den Leitungsschützkontakten wegen ihrer Kompaktheit nicht auf Leiterplatten sondern räumlich von diesen getrennt, beispielsweise in zentral angeordneten Schaltkästen, untergebracht sind. Die notwendigen elektrischen Verbindungen zwischen den strombelasteten Leistungschützkontakten der Leistungsschütze und den nicht-strombelasteten Kontakte der Umsteuerschalter werden in bekannter Weise innerhalb der Schaltanlagen durch entsprechende anlagenindividuelle Kabelbäume hergestellt.

Je nach Art und Umfang der Schaltanlagen mit mehreren Trenn- und Erdungsschaltern, die dementsprechend auch mit mehreren Motorantrieben ausgestattet sind, ergeben sich umfangreiche verschiedenartige Verkabelungen, die wegen der unterschiedlichen Strombelastbarkeit der jeweiligen Leistungsschütze und Umsteuerschalter darüber hinaus durch mehrfaches Wechseln an die verschiedenen Verdrahtungsebenen heranzuführen sind.

Die der Erfindung zugrundeliegende Aufgabe besteht darin, die Antriebseinrichtungen von Leistungsschaltern in Bezug auf deren elektrische Verbindungen ihren Funktionskomponenten untereinander wesentlich zu vereinfachen und insbesondere die verschiedenartigen Verkabelungen der Schaltanlagen wegen der unterschiedlichen Strombelastbarkeiten ihrer unterschiedlichen Einzelkomponenten merklich einzuschränken, ohne jedoch den in dieser Technik üblichen Sicherheitsstandard zu verringern. Erfindungsgemäß wird dies durch die Merkmale
1.1 Umsteuerschalter und die Leistungsschütze sind jeweils durch ein einheitliche drehrichtungsrepräsentierende Kleinleistungsrelais gebildet,
1.2 die Kleinleistungsrelais weisen jeweils mindestens zwei elektrisch entkoppelte, parallel schaltbare Relaiskontakte auf,
1.3 den Relaiskontakten der Kleinleistungsrelais sind jeweils ein Ausgleichskondensator parallel geschaltet, erreicht.

Der Erfindung liegt im wesentlichen die aus der DE 44 47 391 C1 gewonnende Erkenntnis zugrunde, die innerhalb von Vakuumschaltern parallel zu deren Schaltstrecken zur Erhöhung der zu schaltenden Gleichströme eingesetzten Ausgleichskondensatoren für Kontaktelemente in gasförmiger Atmosphäre, also auch für luftisolierte Relaiskontakte, nutzbringend einzusetzen. Trotz der bekannten unterschieden Eigenarten dieser Isoliermedien hat es sich überraschenderweise herausgestellt, daß sich auch bei den in gasisolierten Medien angeordneten Kontaktelementen beim öffnen der Kontakte ein sicheres Erlöschen des Lichtbogens in kurzer Zeit durch den Einsatz der Ausgleichskondensatoren erreichen läßt. Damit ist die Möglichkeit gegeben, die Umsteuerschalter und die Leistungsschütze in Form eines einheitlichen Kleinleistungsrelais vorzusehen, das in bekannter Weise drehrichtungsabhängig ansteuert werden kann. Die Kleinleistungsrelais können somit also auch zum gefahrlosen Schalten von strombelasteten Schaltkreisen eingesetzt werden. Dadurch entfallen sämtliche, auf Grund der unterschiedlich zulässigen Strombelastbarkeiten bisher notwendigen, zusätzlichen Maßnahmen hinsichtlich der Verkabelungen innerhalb der Schaltanlagen. Die bekannten Schaltungen lassen sich mit einheitlichen Kleinleistungsrelais herstellen.

Gemäß einer vorteilhaften Ausgestaltung der Erfindung ist das Merkmal
2.1 die Relaiskontakte sind durch magnetisch beblasbare Schaltkontakte realisiert, vorgesehen. Mit diesem an sich bekannten Effekt wird das frühzeitige Erlöschen des Lichtbogens beim öffnen der Relaiskontakte zusätzlich begünstigt.

Eine weitere vorteilhafte Ausgestaltung der Erfindung ist durch das Merkmal
3.1 die Ausgleichskondensatoren sind jeweils im Bereich einer Kapazität bemessen, die dem 10²- bis 10⁵-fachen Wert der Kapazität der geöffneten Relaiskontakte entsprechen, gegeben. Dieser Kapazitätsbereich stellt für die Ausgleichskondensatoren ein Optimum ihrer Wirkungsweise bezüglich der frühen Löschung des Lichtbogens dar.

Eine weitere vorteilhafte Ausgestaltung der Erfindung ist durch die Merkmale
4.1 die Kleinleistungsrelais sind mit den Ausgleichkondensatoren auf einer gemeinsamen Leiterplatte angeordnet,
4.2 die beweglichen Teile der jeweiligen Relaiskontakte sind mit einem Spannungsanschluß der jeweiligen Leiterplatte verbunden,
4.3 die festen Teile der jeweiligen Relaiskontakte sind mit einem Motoranschluß der jeweiligen Leiterplatte jeweils drehrichtungsabhängig verbunden,
erreicht. Mit der gemeinsamen Unterbringung mehrerer Kleinleistungsrelais auf einer einzigen Leiterplatte lassen sich die bekannten Schaltmaßnahmen zur Steuerung der Antriebseinrichtungen für die unterschiedlichsten Schaltanlagen mit geringen Raumbedarf und sehr stark reduzierten verschiedenartigen Kabelbäumen realisieren.

Die Erfindung wird durch drei Figuren näher erläutert, wobei die Figur 1 den Grundaufbau der drehrichtungsabhängigen Steuerung einer Antriebseinrichtung für einen Leistungsschalter darstellt, die Figur 2 die prinzipielle Beschaltung eines Relaiskontaktes mit dem Ausgleichskondensator zeigt und die Figur 3 die Auswirkung der Ausgleichskondensatoren auf den Kurvenverlauf der Kontaktströme und der Kontaktspannungen beim Öffnen des Relaiskontakts erkennen läßt.

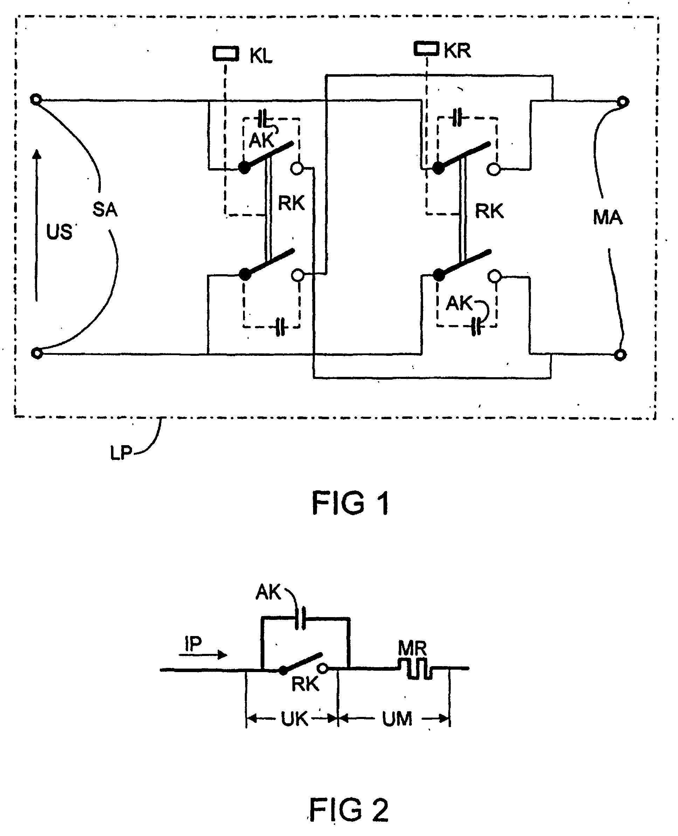

Die Figur 1 zeigt das Kleinleistungsrelais für den Linkslauf KL und das Kleinleistungsrelais für den Rechtslauf KR, die mit ihren jeweiligen Relaiskontakten RK durch Strombahnen auf der gemeinsamen Leiterplatte LP die benötigten Stromkreise zwischen dem Spannungsanschluß SA der Summenspannung US und den Motoranschluß MA herstellen. Weiterhin ist ersichtlich, daß jeweils zwei parallel betätigte Relaiskontakte RK des Kleinleistungsrelais für den Linkslauf KL und zwei ebenfalls parallel betätigte und gleich bezeichnete Relaiskontakte RK des Kleinleistungsrelais für den Rechtslauf KR jeweils durch einen Ausgleichskondensator AK parallel beschaltet sind. Dabei sind die nichtbeweglichen Teile der Relaiskontakte RK des Kleinleistungsrelais für den Linkslauf KL im Gegensatz zu den entsprechenden nichtbeweglichen Teilen der Relaiskontakte RK des Kleinleistungsrelais für den Rechtslauf RK so geschaltet, daß sich die am Spannungsanschluß SA gerichtete Summenpannung US am Motoranschluß MA umkehrt. Durch die Umkehrung der Summenspannung US am Motoranschluß MA wird in bekannter Weise die. Drehrichtung des nicht dargestellten Gleichstrommotors vom Rechtslauf in den Linkslauf bewirkt. Die separat ansteuerbaren Kleinleistungsrelais KL, KR sind dabei untereinander verriegelt, d. h., das jeweils andere Kleinleistungsrelais KL bzw. KR ist nur dann ansteuerbar, wenn sich das vorangegangen angesteuerte Kleinleistungsrelais KR. bzw. KL in definierter Ausgangsposition befindet.

Die Figur 2 zeigt die prinzipielle Beschaltung des Relaiskontakts RK mit dem dazu parallelgeschalteten Ausgleichskondensator AK. Sobald der Relaiskontakt RK wirksam geschlossen ist, fließt der Phasenstrom IP über den Motorwiderstand MR, wobei die Richtung des wirksamen Phasenstromes gleichzeitig die Drehrichtung des Gleichstrommotors bestimmt. Hier ist angedeutet, däß sich am Relaiskontakt RK die Kontaktspannung UK und am Motorwiderstand MR die Motorspannung UM einstellt, deren Wert der Summenspannung US am Spannungsanschluß SA entspricht.

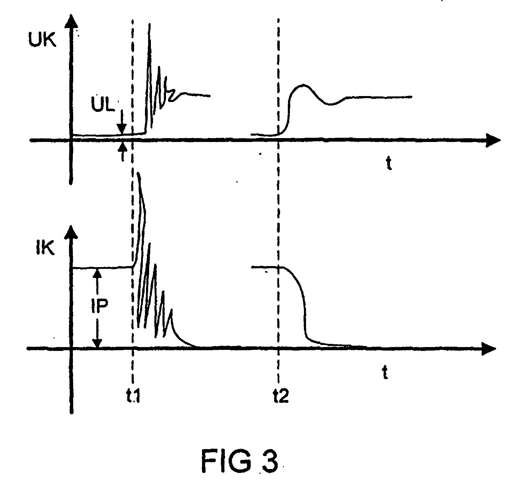

Die Figur 3 zeigt die Kurvenform der Kontaktspannung UK und die Kurvenform des Kontaktstroms IK in Abhängigkeit der Zeit t, wobei der erste Zeitpunkt t1 den bisher üblichen Kontaktspannungsverlauf nach Erreichen der Lichtbogenbrennspannung UL und des Phasenstroms IP nach dem Öffnen des Relaiskontakts RK zeigt, während der zweite Zeitpunkt t2 in vereinfachter Darstellung die Kurvenverläufe der gleichen Parameter mit dem parallel zum Relaiskontakt RK geschalteten Ausgleichskondensator AK abbildet. Diese veränderten Kurvenformen lassen erkennen, daß sowohl ein Überschwingen der Kontaktspannung UK als auch der Anstieg und die zusätzlich belastenden Überschwingvorgänge bei dem Kontaktstrom IK mit dem parallel geschalteten Ausgleichskondensatoren auch in gasförmigen Medien weitestgehend vermieden sind.

## Patentansprüche

1. Antriebseinrichtung zum Ein- und Ausschalten von Leistungsschaltern, insbesondere von Trenn- und/oder Erdungsschaltern von Mittelspannungs-Schaltanlagen, mit einem drehrichtungsumschaltbaren Gleichstrommotor und einer Schalteinrichtung, die jeweils zwei separat ansteuerbare, gegenseitig verriegelte, je einer Drehrichtung des Gleichstrommotors zugeordnete Umsteuerschalter enthält, deren Kontakte die zur Drehrichtungsumschaltung notwendige Sromrichtungsumpolung an den Wicklungen der Gleichstrommotore vornehmen, und Leistungsschütze mit den die erforderlichen Schaltvermögen enthaltenden Leistungsschützkontakten zur Lastschaltung aufweisen, **gekennzeichnet durch** die Merkmale
1.1 Umsteuerschalter und die Leistungsschütze sind jeweils **durch** einheitliche drehrichtungsrepräsentierende Kleinleistungsrelais (KL,KR) gebildet,
1.2 die Kleinleistungsrelais (KL, KR) weisen jeweils mindestens zwei elektrisch entkoppelte, parallel schaltbare Relaiskontakte (RK) auf,
1.3 den Relaiskontakten (RK) der Kleinleistungsrelais (KL, KR) sind jeweils ein Ausgleichskondensator (AK) parallel geschaltet.

2. Antriebseinrichtung zum Ein- und Ausschalten von Leistungsschaltern nach Patentanspruch 1, **gekennzeichnet durch** das Merkmal
2.1 die Relaiskontakte (RK) sind **durch** magnetisch beblasbare Schaltkontakte realisiert.

3. Antriebseinrichtung zum Ein- und Ausschalten von Leistungsschaltern nach Patentanspruch 1, **gekennzeichnet durch** das Merkmal
3.1 die Ausgleichskondensatoren (AK) sind jeweils im Bereich einer Kapazität bemessen, die dem 10²⁻ bis 10⁵-fachen Wert der Kapazität der geöffneten Relaiskontakte (RK) entsprechen.

4. Antriebseinrichtung zum Ein- und Ausschalten von Leistungsschaltern nach Patentanspruch 1, den Patentansprüchen 1 und 2 sowie den Patentansprüchen 1 und 3, **gekennzeichnet durch** die Merkmale
4.1 die Kleinleistungsrelais (RK) sind mit den Ausgleichkondensatoren (AK) auf einer gemeinsamen Leiterplatte (LP) angeordnet,
4.2 die beweglichen Teile der jeweiligen Relaiskontakte (RK) sind mit einem Spannungsanschluß (SA) der jeweiligen Leiterplatte (LP) verbunden,
4.3 die festen Teile der jeweiligen Relaiskontakte (RK) sind mit einem Motoranschluß (MA) der jeweiligen Leiterplatte (LP) jeweils drehrichtungsabhängig verbunden.

## Claims

1. Drive device for connecting and disconnecting circuit breakers, in particular isolating switches and/or earthing switches in medium-voltage switchgear assemblies, having a reversible DC motor and having a switching device, which in each case contains two separately driveable, mutually interlocked reversing switches which are each associated with one rotation direction of the DC motor and whose contacts reverse the current direction to the windings of the DC motor as required to change the rotation direction, and have power contactors with the power protection contacts, containing the necessary switching capacity, for load switching,
**characterized by** the following features:
1.1 the reversing switches and the power contactors are each formed by a standard miniature power relay (KL, KR) which represents the rotation direction,
1.2 the miniature power relays (KL, KR) each have at least two electrically decoupled relay contacts (RK) which can be connected in parallel, and
1.3 a compensating capacitor (AK) is in each case connected in parallel with the relay contacts (RK) of the miniature power relays (KL, KR).

2. Drive device for connecting and disconnecting circuit breakers according to Patent Claim 1,
**characterized by** the following feature:
2.1 the relay contacts (RK) are formed by switching contacts which can be blown magnetically.

3. Drive device for connecting and disconnecting circuit breakers according to Patent Claim 1,
**characterized by** the following feature:
3.1 the compensating capacitors (AK) are each designed to have a capacitance in the range corresponding to 10² to 10⁵ times the value of the capacitance of the opened relay contacts (RK).

4. Drive device for connecting and disconnecting circuit breakers according to Patent Claim 1, Patent Claims 1 and 2 as well as Patent Claims 1 and 3,
**characterized by** the following features:
4.1 the miniature power relays (RK) are arranged with the compensating capacitors (AK) on a common printed circuit board (LP),
4.2 the moving parts of the respective relay contacts (RK) are connected to a voltage connection (SA) on the respective printed circuit board (LP),
4.3 the fixed parts of the respective relay contacts (RK) are connected to one motor connection (MA) on the respective printed circuit board (LP) as a function of the respective rotation direction in each case.

## Revendications

1. Dispositif d'actionnement pour la connexion et la déconnexion de sectionneurs de puissance, notamment de sectionneurs et/ou d'interrupteurs de mise à la terre, d'installations de distribution en moyenne tension, comprenant un moteur à courant continu dont le sens peut être inversé et un dispositif de commutation, qui comporte respectivement deux inverseurs pouvant être commandés séparément, mutuellement verrouillés et associés respectivement à un sens de rotation du moteur à courant continu, dont les contacts effectuent l'inversion du sens du courant sur les bobines des moteurs à courant continu nécessaire à l'inversion du sens de rotation, et des contacteurs de puissance ayant des contacts de protection de puissance présentant les pouvoirs de coupure nécessaires,
**caractérisé par** les caractéristiques
1.1 les inverseurs et les contacteurs de puissance sont formés respectivement par un relais (KL, KR) de petite puissance unitaire représentant le sens de rotation,
1.2 les relais (KL, KR) de petite puissance ont respectivement au moins deux contacts (RK) de relais découplés électriquement et pouvant être montés en parallèle,
1.3 des condensateurs (AK) de compensation sont montés respectivement en parallèle aux contacts (RK) des relais (KL, KR) de petite puissance.

2. Dispositif d'actionnement pour la connexion et la déconnexion de sectionneurs de puissance suivant la revendication 1, **caractérisé par** la caractéristique
2.1 les contacts (RK) de relais sont réalisés par des contacts pouvant être soufflés magnétiquement.

3. Dispositif d'actionnement pour la connexion et la déconnexion de sectionneurs de puissance suivant la revendication 1, **caractérisé par** la caractéristique
3.1 les condensateurs (AK) de compensation ont respectivement une capacité qui représente de 10² à 10⁵ fois la valeur de la capacité des contacts (RK) de relais ouverts.

4. Dispositif d'actionnement pour la connexion et la déconnexion de sectionneurs de puissance suivant la revendication 1, les revendications 1 et 2 ainsi que les revendications 1 et 3, **caractérisé par** les caractéristiques
4.1 les relais (RK) de petite puissance sont montés avec les condensateurs (AK) de condensation sur une plaquette (LP) à circuit imprimé commune,
4.2 les parties mobiles des contacts (RK) de relais respectif sont reliées par une borne (SA) de tension à la plaquette (LP) à circuit imprimé respective,
4.3 les parties fixes des contacts (RK) de relais respectifs sont reliées respectivement en fonction du sens de rotation à une borne (MA) pour le moteur de la plaquette (LP) à circuit imprimé respective.
